# EUROPEAN PATENT APPLICATION

(11) **EP 1 182 375 A1**
(43) Date of publication of application: **27.02.2002**
(21) Application number: 01119919.7
(22) Date of filing: 17.08.2001
(51) Int. Cl.: F16G 11/10, A43C 7/00

(54) **Cord clamp**

(30) Priority: 17.08.2000 DE 10040191
(71) Applicant: YKK Stocko Fasteners GmbH, 42327 Wuppertal (DE)
(72) Inventor: Stodt, Frank, 42553 Velbert (DE); Otten, Markus, 42579 Heiligenhaus (DE)
(74) Representative: Patentanwälte Leinweber & Zimmermann

(57) **Abstract**

The cord clamp has a slot (4) receiving the cord (7) between two side walls (1, 2). This walls form with one another an acute angle in the direction of the slot base (5). Each wall is provided with a plurality of clamping ribs (6) inclined relative to the slot base (5) and projecting with respect to the facing wall. These ribs guide the cord in the clamping position as a result of an axial stressing towards the slot base. For use as a fastener on a garment or a shoe, partucularly a sports shoe, one (2) of the two side walls (1, 2) is provided with a fixing edge (9) projecting over the outer edge of the other side wall and can in particular be connected via said fixing edge to the garment.

## Description

The invention relates to a cord clamp with a slot, which receives the cord, between two side walls, which form an acute angle with one another in the direction of the slot base and whereof each is provided with a plurality of clamping ribs inclined with respect to the slot base and projecting towards the facing wall and which guide the cord into the clamping position as a result of axial stressing towards the slot base.

Known cord clamps of this type (DE 196 12 214 A) have in the vicinity of the slot base interconnecting the two side walls and namely in the clamp median plane through holes for the passage of fixing screws, with the aid of which the cord clamps can be secured at the place of use thereof. In a second, modified cord clamp on the outside of the clamp are provided projecting foot portions with corresponding through holes, which permit an identical fixing of the clamps.

In the case of portable fixing areas, such as e.g. areas of this type on textiles, such as garments or shoes, generally screwing is not possible for the purpose of fixing the cord clamps. Therefore up to now it has not been possible to use cord clamps on garments or shoes.

The problem of the invention is to so further develop the known cord clamp of the aforementioned type that in simple manner it can be fixed to articles of clothing, but particularly to shoes and preferably sports shoes and where its advantages fully come into play.

The cord clamp according to the invention solving said problem is essentially characterized in that for use as a fastener on a garment or on a shoe, particularly a sports shoe, one of the two side walls is provided with a fixing edge projecting over the outer edge of the other side wall and which is in particular connectable by means of said fixing edge to the garment. This construction provides a possibility of fixing the cord clamp to garments, particularly shoes in a relatively simple way.

It has proved particularly advantageous if in the end region of the slot base towards which the clamping ribs guide the cord when the latter undergoes axial stressing, the side wall provided with the fixing edge has an opening for introducing the cord into the slot between the walls. After passing the cord through the opening it is merely necessary to introduce the previously tensioned cord into the slot in order to permit its clamping in place and fixing by the latter and its clamping ribs in the slot base area. This obviates the need for the generally necessary formation of a fastening loop.

The opening could optionally be formed by a recess extending towards the fixing edge. However, it has proved particularly appropriate for the opening to be constituted by a round hole. The cord end passed through the opening cannot slide out laterally from the recess area. It is in fact held in a specific position relative to the cord clamp, which makes it easier to grasp and tighten the cord end.

Different methods are conceivable for connecting the fixing end to the garment or shoe/sports shoe and they are a function of the stiffness or resistance of the material from which the cord clamp is made or the material from which the garment or sports shoe is made. It has generally proved most advantageous to join the fixing edge to the garment by sewing.

After tensioning and introducing the cord into the clamping area between the two side walls having the clamping ribs, admittedly a taut cord state is ensured. However, the free end is subject to the risk of being seized or engaged by chance contact with a garment or shoe area moved past and as a result being undesirably removed from the clamping position. It has therefore proved most favourable if on the side remote from the slot base between said side walls is provided a laterally open chamber into which can be slid the free cord end projecting over the fastener. In this position the cord end is largely protected against unintentional contact and carrying along. In a particularly advantageous construction it has proved very advantageous for the chamber to be provided with narrow webs directed towards one another, narrowing the lateral opening thereof and preventing an undesired sliding out of the free cord end. This provides an extremely effective securing of the cord end against unintentional release.

The invention is also directed at a cord clamp in conjunction with the fixing area of the garment or the like and is characterized in that at least this fixing area is made from leather or a textile material or plastic having an identical strength and that in this area is provided a recess, through which the fixing edge-free wall of the fastener can be moved up until the fixing edge engages on the recess edge and in this position the fixing edge can be sewn to the recess edge.

In another advantageous development, the cord clamp is directed at usage on boots or shoes, particularly for sporting purposes, having a cord associated therewith and serving to close the opening embracing the shoe tongue and is characterized in that the two jaws covering the foot instep and receiving and guiding on the edge thereof the tightenable cord in eyelets or the like and in each case provided with a recess for securing the fixing edge of a fastener.

Further details, advantages and features can be gathered from the following description relative to the attached drawings, wherein show:
- Fig. 1: A front view of the cord clamp.
- Fig. 2: A view of one side of the cord clamp.
- Fig. 3: A view of the other side of the cord clamp.
- Fig. 4: A front view of the cord clamp.
- Fig. 5: A sectional view of the cord clamp corresponding to line V-V in fig. 3.
- Figs. 6a to c: Diagrammatic representations for illustrating cord clamp operation on a shoe.

As can be gathered from the drawings, the construction of the cord clamp according to the invention fundamentally coincides with that known for decades in connection with such clamps, e.g. in the form of bulkhead clamps in the sailing field.

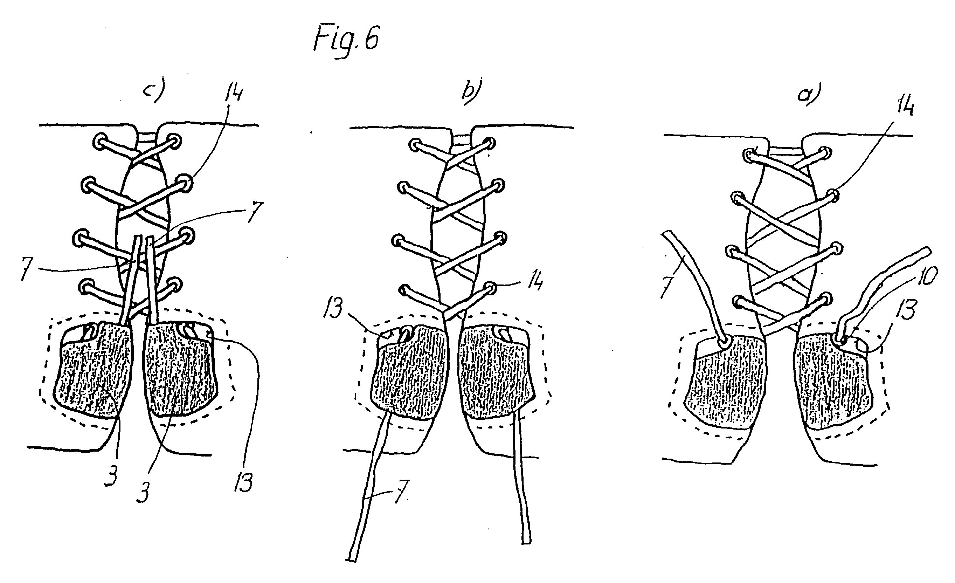

Thus, the illustrated cord clamp comprises a slot 4 bounded by the two side walls 1, 2 of a generally plastic clamp body 3. The two side walls 1, 2 form an acute angle with one another towards the slot base and are in each case provided with inclined clamping ribs 6 with respect to the slot base 5 and which in each case project towards the facing wall. A cord 7 (cf. fig. 6) introduced into the slot is engaged by the clamping ribs 6 and is guided into the clamping position in the case of axial stressing towards the slot base 5. In order to release the cord from the clamping position it is merely necessary to gently pull on the free end of the cord 7 at right angles to the slot base 5.

In order to be able to use said cord clamp as a fastener on garments or shoes, particularly sports shoes and to permit fixing thereon, according to the invention one of the two side walls, in the illustrated example side wall 2, is provided with a fixing edge 9 projecting over the outer edge 8 of the other side wall 1 and in particular connected by means of said fixing edge to the garment or shoe.

Fig. 5 more particularly illustrates that in the end region 5' of the slot base 5 towards which the cord is guided by the clamping ribs 6 in the case of axial cord stressing, the side wall 2 provided with the fixing edge 9 has an opening 10, appropriately in the form of a round hole, used for inserting the cord into the slot between the walls.

Certainly individual cases exist in which the cord clamp is connected to the garment or shoe/boot by the riveting of the fixing edge 9. However, generally use is made of the possibility of sewing the fixing edge 9 to the garment.

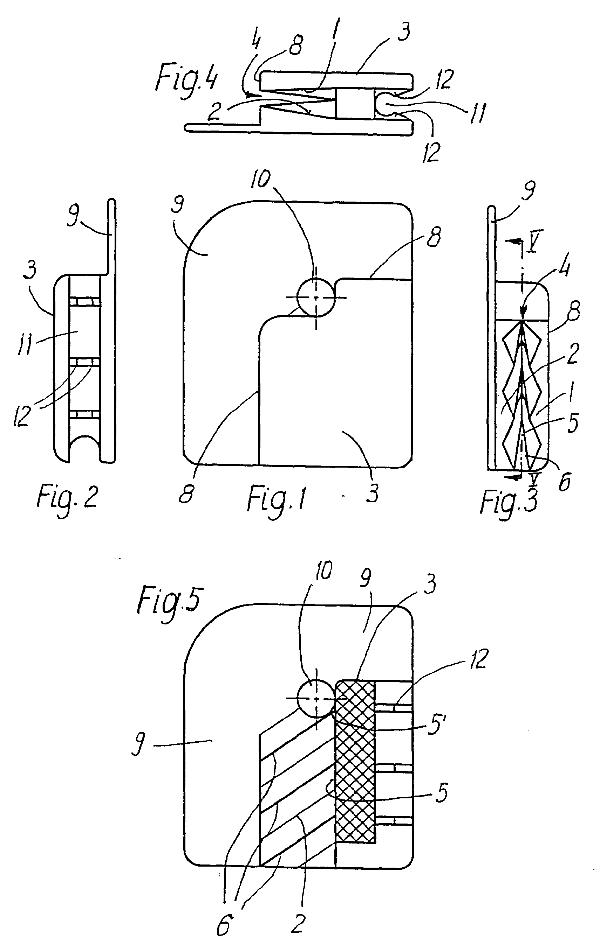

Figs. 2, 4 and 5 clearly illustrate that on the side of the cord clamp remote from the slot base 5 between the side walls 1 and 2 is provided a laterally open chamber 11 into which can be slid the free end of the cord 7 projecting over the fastener. This chamber 11 is provided with narrow webs 12, which are directed against one another, narrow the lateral insertion opening and secure the free end of the cord 7 against undesired sliding out.

Fig. 6 illustrates a cord clamp fixing area of a garment, namely a shoe, in which the fixing area is made from leather or a textile material or plastic having an identical strength. In said area is provided for each cord clamp a recess 13, through which can be passed the fixing edge-free wall of the fastener until the fixing edge 9 engages on the recess edge. In this position the fixing edge 9 can be easily sewn to the recess edge. When used on boots or shoes, particularly for sporting purposes, with the associated cord 7 used for closing the opening embracing the shoe tongue, a cord clamp is associated with each cord end and which in the above-described manner can be sewn with its fixing edge 9 in the location positioned with respect to the recess edge 13 in the vicinity of the two jaws covering the foot instep. Fig. 6 illustrates that after passing through the conventional eyelets 14 and the holes 10 of the two cord clamps, the cord 7 is initially tightened. The cord ends are then transferred from position a into position b, i.e. introduced into the slot 4. In this position the free ends of the cords 7 can easily be secured by further placing round the body of the cord clamp and sliding into the laterally open chamber 11. The narrow webs 12 directed towards one another and narrowing the lateral insertion opening of the chamber 11 effectively prevent an undesired sliding out of said free ends.

## Claims

1. Cord clamp with a slot (4) receiving the cord (7) between two side walls (1, 2), which form with one another an acute angle in the direction of the slot base (5) and whereof each is provided with a plurality of clamping ribs (6) inclined relative to the slot base (5) and projecting with respect to the facing wall and which guide the cord in the clamping position as a result of an axial stressing towards the slot base, **characterized in that** for use as a fastener on a garment or a shoe, particularly a sports shoe, one (2) of the two side walls (1, 2) is provided with a fixing edge (9) projecting over the outer edge of the other side wall and can in particular be connected via said fixing edge to the garment.

2. Cord clamp according to claim 1, **characterized in that** in the end region of the slot base (5) to which the cord (7) is guided by the clamping ribs (6) in the case of axial cord stressing, the side wall (2) provided with the fixing edge (9) has an opening (10) for introducing the cord into the slot (4) between the walls (1, 2).

3. Cord clamp according to claim 2, **characterized in that** the opening is formed by a round hole (10).

4. Cord clamp according to one of the claims 1 to 3, **characterized in that** the fixing edge (9) is joined to the garment by sewing.

5. Cord clamp according to one of the claims 1 to 4, **characterized in that** on the side remote from the slot base (5) between the side walls (1, 2) is provided a laterally open chamber (11), into which can be slid the free end of the cord (7) projecting over the fastener.

6. Cord clamp according to claim 5, **characterized in that** the chamber (11) is provided with narrow webs (12), which are directed towards one another, narrow the lateral opening of the chamber and secure the free end of the cord (7) against undesired sliding out.

7. Cord clamp according to one of the claims 1 to 6 in conjunction with the fixing area of the garment or the like, **characterized in that** at least said fixing area is made from leather or a textile material or plastic having an identical strength and that in said area is provided a recess (13) through which the fixing edge-free wall of the fastener can be moved up until the fixing edge engages on the recess edge and in said position the fixing edge (9) can be sewn to the recess edge.

8. Cord clamp according to one of the preceding claims for use on boots or shoes, particularly sports shoes, with an associated cord (7) used for closing the opening embracing the shoe tongue, **characterized in that** the two jaws covering the foot instep and receiving and guiding on their edge the tightenable cord (7) in eyelets (14) or the like are in each case provided with a recess (13) for securing the fixing edge (9) of a fastener.
